# EUROPEAN PATENT APPLICATION

(11) **EP 3 846 053 A1**
(43) Date of publication of application: **07.07.2021**
(21) Application number: 20152074.9
(22) Date of filing: 15.01.2020
(51) Int. Cl.: G06F 21/32

(54) **SECURITY ACCESS CONTROL**

(30) Priority: 31.12.2019 US 201962955857 P
(71) Applicant: Koninklijke Philips N.V., 5656 AG Eindhoven (NL)
(72) Inventor: PARVANEH, Saman, 5656 AE Eindhoven (NL); GROSS, Brian David, 5656 AE Eindhoven (NL)
(74) Representative: Steenbeek, Leonardus Johannes

(57) **Abstract**

Various embodiments of a stimulus security access device of the present disclosure encompass a stimuli generator (30), one or more physiological sensors (31) and an enhanced security access controller (40) for authenticating or invalidating a security access request. In operation, the stimuli generator (30) is actuated to generate external stimuli whereby the physiological sensor(s) (31) sense(s) a physiological response to the external stimuli. The enhanced security access controller (40) detects one of a stimulated physiological response to the external stimuli sensed by the physiological sensor(s) (31) or a non-stimulated physiological response to the external stimuli sensed by physiological sensor (s) (31) whereby the enhanced security access controller (40) either conditionally authenticates the security access request based on a detection of the stimulated physiological response to the external stimuli, or invalidates the security access request based on a detection of the non-stimulated physiological response to the external stimuli.

## Description

### FIELD OF THE DISCLOSURE

The present disclosure generally relates to security access controllers, devices, systems and methods for authenticating or invalidating a security access request.

### BACKGROUND OF THE DISCLOSURE

Using a camera along with an iris recognition modality and/or a facial recognition modality has become a common authentication method for logging in into computers and cell phones for checking patient records. This new way of access to patient records is used by clinical personnel (e.g., nurse(s) and/or physician(s)) working in hospitals/clinics and also used by patients and informal caregivers checking for sensitive health data.

While the aforementioned common security access authentication methods have proven to reduce a required time to get secure access to health data, the common security access authentication methods are vulnerable to hack tricks, mainly because the common security access authentication methods do not differentiate between an alive requester and a static image/mask.

For example, a hacker may use a static high-quality photo of an authentic secure access requester to gain access to health data securely stored on a personal computer/cell phone incorporating a two-dimensional facial recognition modality.

By further example, a hacker may add a contact lens on top of a static high-quality photo of an iris of an authentic secure access requester to gain access to health data securely stored on a personal computer/cell phone incorporating an iris recognition modality.

By additional example, a hacker may use a face mask of an authentic secure access requester to gain access to health data securely stored on a personal computer/cell phone incorporating a three-dimensional facial recognition modality.

### SUMMARY OF THE DISCLOSURE

It is an object of the invention to provide an improved security access control. The invention is defined by the independent claims. The dependent claims define advantageous embodiments.

One aspect of the present disclosure specifically relates a physiological response to external stimuli (preferably non-hazardous) as a basis for authenticating or invalidating the security access request.

Embodiments of the invention provide an enabling/disabling feature of security access authentication modality(ies) (e.g., a facial recognition modality, an iris recognition modality, a speech recognition modality, a fingerprint recognition modality, a handwriting recognition modality, etc.). The enabling/disabling feature is premised on a detection of either a stimulated physiological response or a non-stimulated physiological response by a secure access requester to external stimuli as will be further exemplary in the present disclosure.

Embodiments of the invention provide a physiological response recognition modality in accordance with the principles of present disclosure that are premised on stored historic stimulated physiological response(s) by a secure access requester to the external stimuli as will be further exemplary described in the present disclosure.

Embodiments of the invention provide an enabling/disabling feature of physiological response recognition modality of the present disclosure.

The present disclosure may be embodied as:
(1) an enhanced security access controller of the present disclosure;
(2) a stimulus security access controller of the present disclosure;
(3) an enhanced security access device of the present disclosure;
(4) a stimulus security access device of the present disclosure;
(5) an enhanced security access system of the present disclosure;
(6) a stimulus security access system of the present disclosure;
(7) an enhanced security access method of the present disclosure; and
(8) a stimulus security access method of the present disclosure.

Various embodiments of an enhanced security access controller of the present disclosure encompass an enhanced security access controller configured to (1) detect either a stimulated physiological response to an external stimuli or a non-stimulated physiological response to the external stimuli, (2) conditionally authenticate the security access request based on a detection of the stimulated physiological response to the external stimuli, and (3) invalidate the security access request based on a detection of the non-stimulated physiological response to the external stimuli.

Examples of an external stimuli include, but are not limited to, visual stimuli (e.g., a brightening, a flashing or a color change of a light or lights), and a sound stimuli (e.g., a generating or a modulating of an audible sound or a non-audible sound).

Examples of a physiological response to an external stimuli include, but are not limited to, (1) a perceivable constriction or an imperceivable constriction of an eye pupil stimulated by the external stimuli or a non-constriction of an eye pupil to the external stimuli, (2) a perceivable or imperceivable galvanic skin response stimulated by the external stimuli or a non-galvanic skin response to the external stimuli, and (3) a perceivable variation or an imperceivable variation of an electrocardiogram, a heart rate, an electroencephalogram and/or skin color/tone stimulated by the external stimuli or a non-variation of an electrocardiogram, a heart rate, an electroencephalogram and/or skin color/tone to the external stimuli.

For purposes of describing and claiming the present invention, a stimulated physiological response is defined as a perceivable physiological response stimulated by the external stimuli, and non-stimulated physiological response is defined as a imperceivable physiological response stimulated by the external stimuli or a non-stimulation to the external stimuli.

Various embodiments of a stimulus security access controller of the present disclosure encompass an enhanced security access controller of the present disclosure being further configured to control a generation of the external stimuli and/or a sensing of physiological response to the external stimuli.

Various embodiments of an enhanced security access device of the present disclosure encompass an enhanced security access controller of the present disclosure being installed within numerous and various security access devices as known in the art of the present disclosure or hereinafter conceived, for authenticating or invalidating a secure access request.

Various embodiments of a stimulus security access device of the present disclosure encompass an enhanced security access controller of the present disclosure or a stimulus security access controller installed within one or numerous and various security access devices, as known in the art of the present disclosure or hereinafter conceived, for authenticating or invalidating a secure access request. Such stimulus security access devices further encompass a stimuli generator controllable to generate the external stimuli, and one or more physiological sensor(s) operable to sense the physiological response to the external stimuli.

For embodiments of a stimulus security access device encompassing a stimulus security access controller, the stimulus security access controller controls an operation of the stimuli generator and/or an operation of the physiological sensor(s).

Examples of a stimuli generator include, but are not limited to, as known in the art of the present disclosure or hereinafter conceived, a display screen, a lamp, a strobe light, a flashlight, a speaker and a musical instrument.

Examples of a physiological sensor include, but are not limited to, as known in the art of the present disclosure or hereinafter conceived, an iris scanner, a camera, an electrocardiogram sensor, an electroencephalogram sensor, a photoplethysmography sensor, a color sensor and a skin impedance sensor.

Various embodiments of an enhanced security access system of the present disclosure encompass an enhanced access device of the present disclosure being incorporated within one of numerous and various security access systems, as known in the art of the present disclosure or hereinafter conceived, for authenticating or invalidating a secure access request for access to secured data/content, machines, devices, workstations, etc. securely managed by the security access system (e.g., an electronic records system).

Various embodiments of a stimulus security access system of the present disclosure encompass a stimulus security access device of the present disclosure being incorporated within one of numerous and various security access systems, as known in the art of the present disclosure or hereinafter conceived, for authenticating or invalidating a secure access request for access to secured data/content, machines, devices, workstations, etc. securely managed by the security access system (e.g., an electronic records system).

Various embodiments of an enhanced security access method of the present disclosure encompass an execution by an enhanced security access controller of the present disclosure of an authentication or an invalidation of a security access request. The enhanced security access method of the present disclosure involves the enhanced security access controller (1) detecting either a stimulated physiological response to an external stimuli or a non-stimulated physiological response to the external stimuli, (2) conditionally authenticating the security access request based on a detection of the stimulated physiological response to the external stimuli, and (3) invalidating the security access request based on a detection of the non-stimulated physiological response to the external stimuli.

Various embodiment of a stimulus security access method of the present disclosure encompass an execution by a stimulus security access controller of the present disclosure of an authentication or an invalidation of a security access request. The stimulus security access method of the present disclosure involves the stimulus security access controller (1) controlling a generation of an external stimuli and/or a sensing of physiological response to the external stimuli, (2) detecting either a stimulated physiological response to an external stimuli or a non-stimulated physiological response to the external stimuli, (3) conditionally authenticating the security access request based on a detection of the stimulated physiological response to the external stimuli, and (4) invalidating the security access request based on a detection of the non-stimulated physiological response to the external stimuli.

The foregoing embodiments and other embodiments of the present disclosure as well as various objectives and advantages of the present disclosure will become further apparent from the following detailed description of various embodiments of the present disclosure read in conjunction with the accompanying drawings. The detailed description and drawings are merely illustrative of the present disclosure rather than limiting, the scope of the present disclosure being defined by the appended claims and equivalents thereof.

### BRIEF DESCRIPTION OF THE DRAWINGS

The present disclosure will present in detail the following description of exemplary embodiments with reference to the following figures wherein:
FIG. 1 illustrates an exemplary embodiment of an enhanced/stimulus security access device in accordance with the present disclosure;
FIG. 2 illustrates an exemplary embodiment of a flowchart representative of an enhanced/stimulus security access method in accordance with the present disclosure;
FIG. 3 illustrates an exemplary operation of the enhanced/stimulus security access device of FIG. 1;
FIG. 4 illustrates an exemplary embodiment of a visual stimulus security access device in accordance with the present disclosure;
FIG. 5 illustrates an exemplary embodiment of a flowchart representative of a visual stimulus security access method in accordance with the present disclosure;
FIG. 6A illustrates a first exemplary embodiment of a light illuminator in accordance with the present disclosure;
FIG. 6B illustrates a second exemplary embodiment of a light illuminator in accordance with the present disclosure;
FIG. 7 illustrates an exemplary embodiment of a flowchart representative of a light illumination method in accordance with the present disclosure;
FIG. 8 illustrates an exemplary embodiment of a natural response detector in accordance with the present disclosure;
FIG. 9 illustrates an exemplary embodiment of a flowchart representative of a natural response detection method in accordance with the present disclosure;
FIG. 10A illustrate a first exemplary embodiment of the natural response detector of FIG. 8.
FIG. 10B illustrates a second exemplary embodiment of the natural response detector of FIG. 8.
FIG. 11 illustrates an exemplary embodiment of an enhanced human authenticator in accordance with the present disclosure;
FIG. 12 illustrates an exemplary embodiment of a flowchart representative of an enhanced human authentication method in accordance with the present disclosure;
FIG. 13A illustrates a first exemplary embodiment of a biomarker authenticator of FIG. 11;
FIG. 13B illustrates a first exemplary embodiment of a human authenticator in of FIG. 11;
FIG. 14A illustrates a second exemplary embodiment of a biomarker authenticator of FIG. 11;
FIG. 14B illustrates a third exemplary embodiment of a biomarker authenticator of FIG. 11;
FIG. 15A illustrates a second exemplary embodiment of a human authenticator in of FIG. 11;
FIG. 15B illustrates a fourth exemplary embodiment of a biomarker authenticator of FIG. 11;
FIG. 16A illustrates a first exemplary embodiment of a classifier network in accordance with the present disclosure;
FIG. 16B illustrates a second exemplary embodiment of a classifier network in accordance with the present disclosure; and
FIG. 17 illustrates an exemplary embodiment of a visually stimulating security access controller of the present disclosure.

### DETAILED DESCRIPTION OF EMBODIMENTS

The present disclosure is applicable to numerous and various authentications and invalidations of security access requests for access to secured data/content, machines, devices, workstations, etc.

The present disclosure is premised on analyzing a sensed physiological response by a security access requester to external stimuli to thereby differentiate a human security access requester from a non-human security access requester (e.g., static images/masks) as a basis for timely and credibly authenticating or invalidating a secure access request, particularly to secured data/content (e.g., medical/health data).

More particularly, the present disclosure proposes a combination of detecting perceivable physiological responses to external stimuli (e.g., a brightening, a flashing and a color change of a light, or a modulation or a generation of an audible sound or a non-audible sound) with security access modality(ies) as known in the art of the present disclosure or hereinafter conceived (e.g., a facial recognition modality, an iris recognition modality, a speech recognition modality, a fingerprint recognition modality, a handwriting recognition modality, etc.) as a basis for authenticating or invalidating a secure access request, particularly to secured data/content (e.g., medical/health data).

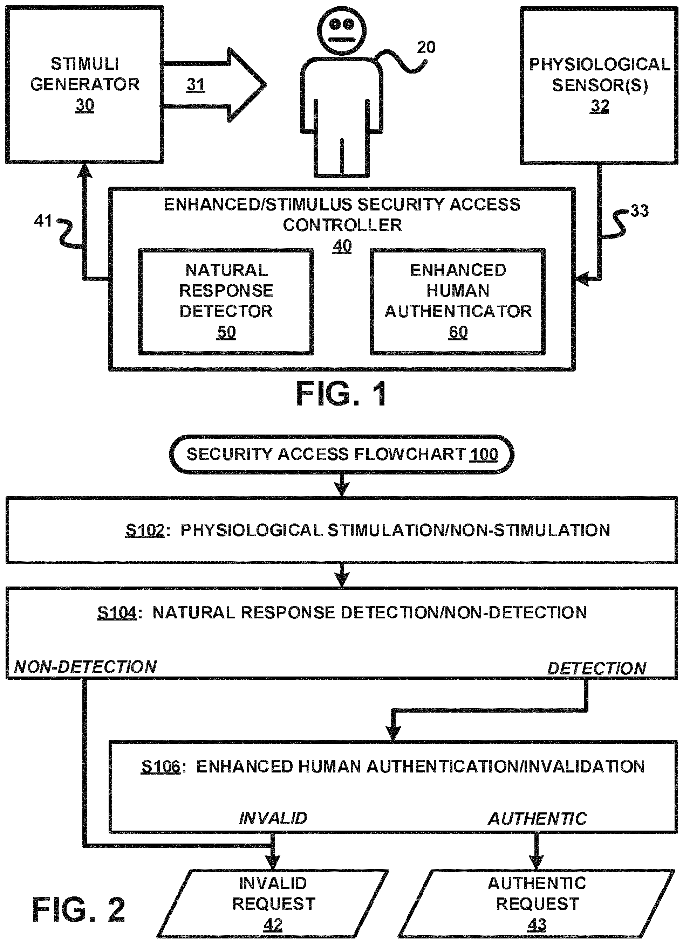

To facilitate an understanding of the present disclosure, the following description of FIGS. 1-3 teaches exemplary embodiments of enhanced/stimulus security access controllers, devices and methods in accordance with the present disclosure. From the description of FIGS. 1-3, those having ordinary skill in the art of the present disclosure will appreciate how to apply the present disclosure to make and use additional embodiments of enhanced/stimulus security access controllers, devices and methods in accordance with the present disclosure.

FIG. 1 illustrates an enhanced/stimulus security access device of the present disclosure employing a stimuli generator 30, one or more physiological sensors 32 and an enhanced/stimulus security access controller 40 of the present disclosure for authenticating or invalidating a security access request.

In practice, stimuli generator 30 broadly encompasses any device, apparatus, instrument, etc., as known in the art of the present disclosure and hereinafter conceived, that is controllable to generate external stimuli 31.

Examples of stimuli generator 30 include, but are not limited to, a display screen, a lamp, a strobe light, a flashlight, a speaker and a musical instrument.

Examples of external stimuli 31 include, but are not limited to, visual stimuli (e.g., a brightening, a flashing or a color change of a light or lights), and a sound stimuli (e.g., a generating or a modulating of an audible sound or a non-audible sound).

In practice, stimuli generator 30 may be consumer grade stimuli generator or professional grade stimuli generator.

Still referring to FIG. 1, in practice, a physiological sensor 32 broadly encompasses any sensor, as known in the art of the present disclosure and hereinafter conceived, to sense a physiological response to the external stimuli 31.

Examples of physiological sensor 32 include, but are not limited to, an iris scanner, a camera, an electrocardiogram sensor, an electroencephalogram sensor, a photoplethysmography sensor, a color sensor and a skin impedance sensor.

In practice, physiological sensor 32 may be wearable/mountable/attachable sensor, and may be consumer grade physiological sensor or a professional grade physiological sensor.

Examples of a physiological response to an external stimuli include, but are not limited to, (1) a perceivable constriction or an imperceivable constriction of an eye pupil stimulated by the external stimuli or a non-constriction of an eye pupil to the external stimuli, (2) a perceivable or imperceivable galvanic skin response stimulated by the external stimuli or a non-galvanic skin response to the external stimuli, and (3) a perceivable variation or an imperceivable variation of an electrocardiogram, a heart rate, an electroencephalogram and/or skin color/tone stimulated by the external stimuli or a non-variation of an electrocardiogram, a heart rate, an electroencephalogram and/or skin color/tone to the external stimuli.

Still referring to FIG. 1, in practice, enhanced/stimulus security access controller 40 broadly encompasses all structural configurations of a controller, as known in the art of the present disclosure and herein conceived, that is structured in accordance with the present disclosure for authenticating or invalidating a security access request as exemplary described herein, and enhanced/stimulus security access controller 40 employs application modules in the form of a natural response detector 50 and an enhanced human authenticator 60 for authenticating or invalidating a security access request in accordance with the present disclosure as exemplary described herein.

In one embodiment, enhanced/stimulus security access controller 40 is configured as a main circuit board or integrated circuit for controlling an application of various principles of the present disclosure for authenticating or invalidating a security access request as exemplary described herein. Natural response detector 50 and an enhanced human authenticator 60 are integrated or segregated application modules incorporated within or accessible by enhanced/stimulus security access controller 40. In practice, natural response detector 50 and an enhanced human authenticator 60 are structured as an electronic circuit (e.g., electronic components and/or hardware) and/or an executable program (e.g., executable software stored on non-transitory computer readable medium(s) and/or firmware) for executing an authentication or a validation of a security access request in accordance with the present disclosure as exemplary described herein.

Still referring to FIG. 1, in operation, the enhanced/stimulus security access device of FIG. 1 executes a flowchart 100 shown in FIG. 2 that is representative of an enhanced/stimulus security access method of the present disclosure.

Referring to FIGS. 1 and 2, a stage S102 of flowchart 100 encompasses a generation of an external stimuli 31 by external generator 30 and a sensing by physiological sensor(s) 32 of a physiological response by a security access requester 20 to the external stimuli 31.

In one exemplary embodiment of stage S102 in view of an enhanced security access device of the present disclosure, stimuli generator 30 receives a signal or a command from a controller 40 or another controller of stimuli generator 30 (not shown) to generate external stimuli 31 in response to a communicated or actionable security access request by security access requester 20. Physiological sensor(s) 32 is(are) spatially positioned and oriented or attached/mounted to security access requester 20 to sense a physiological response by security access requester 20 to external stimuli 31. Physiological sensor(s) 32 communicate(s) the sensed physiological response to controller 40 via line(s) of communication 33 (e.g., wired connection(s), wireless connection(s), a computer bus, etc.).

In a second exemplary embodiment of stage S102 in view of a stimulus security access device of the present disclosure, stimuli generator 30 receives a signal or a command from controller 40 via a line of communication 41 (e.g., a wired connection, a wireless connection, a computer bus, etc.) to generate external stimuli 31 in response to a communication to controller 40 or another controller (not shown) of a security access request by security access requester 20. Physiological sensor(s) 32 is(are) spatially positioned and oriented or attached/mounted to security access requester 20 to sense a physiological response by security access requester 20 to external stimuli 31. Physiological sensor(s) 32 communicate(s) the sensed physiological response to controller 40 via line(s) of communication 33 (e.g., wired connection(s), wireless connection(s), a computer bus, etc.).

Still referring to FIGS. 1 and 2, a stage S104 of flowchart 100 encompasses natural response detector 50 detecting whether the sensed physiological response by security access requester 20 to external stimuli 31 is a stimulated physiological response to external stimuli 31 or a non-stimulated physiological response to external stimuli 31.

In practice, a stimulated physiological response is a perceivable physiological response stimulated by the external stimuli, and a non-stimulated physiological response is a imperceivable physiological response stimulated by the external stimuli or a non-stimulation to the external stimuli.

In one exemplary embodiment of stage S104, the physiological response is detected from a comparison of a physiological state of the security access requester 20 as sensed by physiological sensor(s) 32 prior to/concurrent with the generation of the external stimuli 31 and of a physiological state of the security access requester 20 as sensed by physiological sensor(s) 32 concurrent with/subsequent to the generation of the external stimuli 31.

A stimulated physiological response is detected when a differentiation of the pre-physiological state and the post physiological state of the security access requester 20 exceeds a perceivable physiological response threshold or a similarity of the pre-physiological state and the post physiological state of the security access requester 20 satisfies perceivable physiological response criteria. For example, a stimulated physiological response is detectable by natural response detector 50 when security access requester 20 is human and is suitably positioned/oriented relative to stimuli generator 31 to perceive the external stimuli 31.

A non-stimulated physiological response is detected when a differentiation of the pre-physiological state and the post physiological state of the security access requester 20 fails to exceed the perceivable physiological response threshold or a similarity of the pre-physiological state and the post physiological state of the security access requester 20 fails to satisfy the perceivable physiological response criteria. For example, a non-stimulated physiological response is detectable by natural response detector 50 when security access requester 20 is non-human (e.g., a dummy, a mask, an image, etc.) or is a human not suitably positioned/oriented relative to stimuli generator 30 to perceive the external stimuli 31.

Such differentiation or similarity/dissimilarity of the pre-physiological state and the post-physiological state may be derived from (1) any change in a variance of the pre-physiological state based on the post-physiological state, (2) a level trend of the pre-physiological state from the post-physiological state and/or (3) a return time constant from the post-physiological state to the pre-physiological state.

In practice, natural response detector 50 may detect whether the sensed physiological response by security access requester 20 to external stimuli 31 is a stimulated physiological response to external stimuli 31 or a non-stimulated physiological response to external stimuli 31 as a programmed algorithm implementing a comparison of a pre-physiological state input and a post physiological state input to thereby output a detected stimulated physiological response or a detected non-stimulated physiological response in accordance with the present disclosure.

Alternatively in practice, natural response detector 50 may detect whether the sensed physiological response by security access requester 20 to external stimuli 31 is a stimulated physiological response to external stimuli 31 or a non-stimulated physiological response to external stimuli 31 as a classifier functionally mapping a comparison of a pre-physiological state input and a post physiological state input to thereby output a prediction or a score indicative of a detected stimulated physiological response or a detected non-stimulated physiological response in accordance with the present disclosure. When in this disclosure, a classifier is used, it may be e.g., a classifier as known in the art of the present disclosure or herein after conceived including, but not limited to, a Perceptron classifier, a Naive Bayer classifier, a Decision Tree classifier, a Logistic Regression classifier, a K-Nearest Neighbor classifier, an Artificial Neural Network classifier, a Deep Learning classifier and a Support Vector Machine classifier.

In a second exemplary embodiment of stage S104, the physiological response is detected from comparison of a physiological response of the security access requester 20 as sensed by physiological sensor(s) 32 concurrent with/subsequent to the generation of the external stimuli 31 and a universal baseline physiological response of representative security access requesters to external stimuli 31.

A stimulated physiological response is detected when a differentiation of the sensed physiological response and the universal baseline physiological response is less than a perceivable physiological response threshold or a similarity of the sensed physiological response and the universal baseline physiological response satisfies perceivable physiological response criteria. For example, a stimulated physiological response is detectable by natural response detector 50 when security access requester 20 is human and is suitably positioned/oriented relative to stimuli generator 31 to perceive the external stimuli 31.

A non-stimulated physiological response is detected when a differentiation of the sensed physiological response and the universal baseline physiological response exceeds the perceivable physiological response threshold or a dissimilarity of the sensed physiological response and the universal baseline physiological response fails to satisfy perceivable physiological response criteria. Again, a non-stimulated physiological response is detectable by natural response detector 50 when security access requester 20 is non-human (e.g., a dummy, a mask, an image, etc.) or is a human not suitably positioned/oriented relative to stimuli generator 30 to perceive the external stimuli 31.

Such differentiation or similarity/dissimilarity of the sensed physiological response and the universal baseline physiological response may be derived from (1) any change in a variance of the sensed physiological response based on the universal baseline physiological response, (2) a level trend of the sensed physiological response from the universal physiological response and/or (3) a return time constant from the universal physiological response to the sensed physiological response.

In practice, natural response detector 50 may detect whether the sensed physiological response by security access requester 20 to external stimuli 31 is a stimulated physiological response to external stimuli 31 or a non-stimulated physiological response to external stimuli 31 as a programmed algorithm implementing a comparison of a sensed physiological response input and a universal baseline physiological response input/parameter to thereby output a detected stimulated physiological response or a detected non-stimulated physiological response in accordance with the present disclosure.

Alternatively in practice, natural response detector 50 may detect whether the sensed physiological response by security access requester 20 to external stimuli 31 is a stimulated physiological response to external stimuli 31 or a non-stimulated physiological response to external stimuli 31 as a classifier functionally mapping a comparison of a sensed physiological response input and a universal baseline physiological response input/parameter to thereby output a prediction or a score indicative of a detected stimulated physiological response or a detected non-stimulated physiological response in accordance with the present disclosure.

If natural response detector 50 detects a non-stimulated physiological response to external stimuli 31 during stage S104, then controller 40 generates/communicates an invalid security access request 42 and flowchart 100 is terminated (e.g., a textual/graphic display, a verbalization and/or an audible alert of an invalid security access request 42).

If natural response detector 50 detects a stimulated physiological response to external stimuli 31 during stage S104, then controller 40 proceeds to a stage S106 of flowchart 100 to conditionally authenticate the security access request.

Still referring to FIGS. 1 and 2, in one embodiment, stage S106 encompasses enhanced human authenticator 60 being enabled, via the detected stimulated physiological response to external stimuli 31, to execute one or more security access modalities as known in the art of the present disclosure and hereinafter conceived for testing an authenticity of a security access request and/or to execute a physiological response recognition modality in accordance with the present disclosure for testing an authenticity of a security access request.

Examples of security access modalities include, but are not limited to, a facial recognition modality, an iris recognition modality, a speech recognition modality, a fingerprint recognition modality and a handwriting recognition modality.

Examples of security access data inputs associated with security access modalities include, but are not limited to, personal information (e.g., name, title, password, private key, etc.), facial scans/images, iris scans/images, fingerprint scans/images, live speech and live signature.

In practice, human authenticator 60 may execute one or more security access modalities to test an authenticity of a security access request as a programmed algorithm inputting security access data applicable to the particular type(s) of security access modality(ies) to thereby authenticate or invalidate the security access request.

Alternatively in practice, human authenticator 60 may execute one or more security access modalities to test an authenticity of a security access request as a classifier or network of classifiers functionally mapping security access data applicable to the particular type(s) of security access modality(ies) to thereby output a prediction or a score indicative of the authenticity or the invalidity of the security access request.

A physiological response recognition modality of the present disclosure encompasses a comparison of the sensed physiological response of the security access requester 20 to external stimuli 31 to a personal baseline physiological response derived from archived sensed physiological response(s) of the security access requester 20 to external stimuli, identical to or equivalent to external stimuli 31, to thereby authenticate or invalidate the security access request.

In practice, an authentic security access request may be determined when a differentiation of the sensed physiological response and the personal baseline physiological response is less than an invalidation threshold or a similarity of the sensed physiological response and the universal baseline physiological response satisfies authenticity criteria.

Also in practice, an invalid security access request may be determined when a differentiation of the sensed physiological response and the personal baseline physiological response exceeds an invalidation threshold or a dissimilarity of the sensed physiological response and the universal baseline physiological response satisfies invalidation criteria.

Further in practice, enhanced human authenticator 60 may execute the physiological response recognition modality to test an authenticity of a security access request as a programmed algorithm inputting the sensed physiological response and an archived personal baseline physiological response to thereby authenticate or invalidate the security access request.

Alternatively in practice, enhanced human authenticator 60 may execute the physiological response recognition modality to test an authenticity of a security access request as a classifier or a network of classifiers functionally mapping the sensed physiological response and an archived personal baseline physiological response to thereby output a prediction or a score indicative of the authenticity or the invalidity of the security access request.

Still referring to FIGS. 1 and 2, for embodiments of enhanced human authenticator 60 implementing a single security access modality or implementing only the physiological response recognition modality, such modality will be generate and communicate invalid security access request 42 or an authentic security access request 43 depending on the output of the modality (e.g., a textual/graphic display, a verbalization and/or an audible alert of invalid security access request 42 or authentic security access request 43).

For embodiments of enhanced human authenticator 60 implementing one or more security access modalities and the physiological response recognition modality, the outputs of the modalities will be aggregated, logically analyzed or functionally mapped in a manner to generate and communicate invalid security access request 42 or authentic security access request 43 (e.g., a textual/graphic display, a verbalization and/or an audible alert of invalid security access request 42 or authentic security access request 43).

In practice, an output aggregation of the security access modality(ies) and the physiological response recognition modality may involve a summation, an averaging or any other manner of combining outputs of the modalities.

In practice, an output logical analysis of the security access modality(ies) and the physiological response recognition modality may involve a logical conjunction and/or a logical disjunction of outputs of the modalities.

In practice, an output functional mapping of the security access modality(ies) and the physiological response recognition modality may involve a machine learning model or a network of machine learning models (e.g., a classifier).

For embodiments of enhanced human authenticator 60 implementing two or more security access modalities only, the outputs of the modalities will be aggregated, logically analyzed or functionally mapped in a manner to generate and communicate invalid security access request 42 or authentic security access request 43 (e.g., a textual/graphic display, a verbalization and/or an audible alert of invalid security access request 42 or authentic security access request 43).

In practice, an output aggregation of the security access modalities may involve a summation, an averaging or any other manner of combining outputs of the modalities.

In practice, an output logical analysis of the security access modalities may involve a logical conjunction and/or a logical disjunction of outputs of the modalities.

In practice, an output functional mapping of the security access modalities may involve a machine learning model or a network of machine learning models (e.g., a classifier).

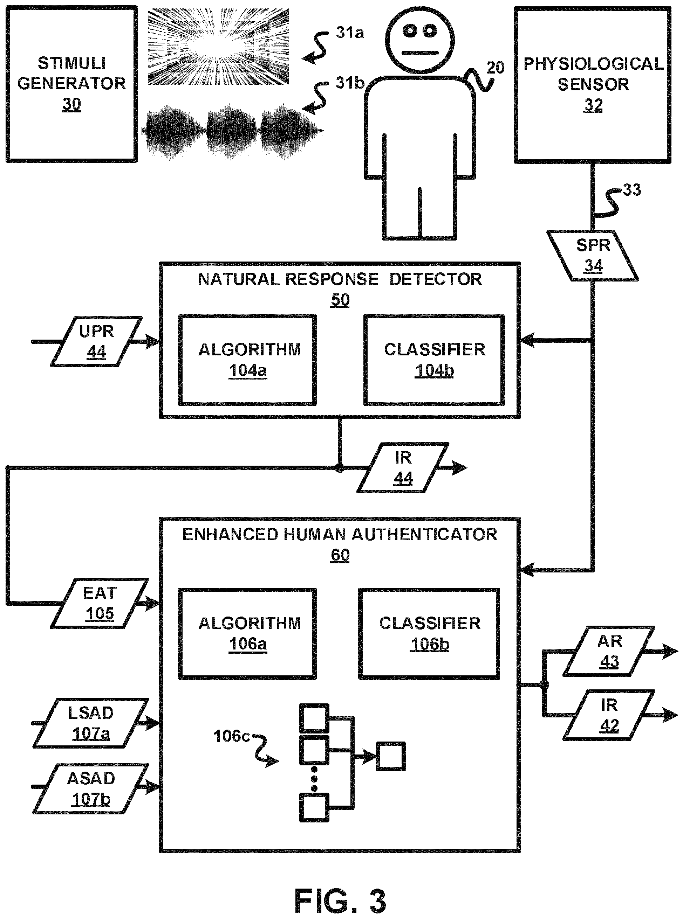

FIG. 3 illustrates an exemplary operation of the enhanced/stimulus security access device of FIG. 1.

Referring to FIG. 3, in response to a security access request from requester 20, stimuli generator 30 is actuated to generate a visual stimuli 31a or alternatively a sound stimuli 31b.

In one exemplary embodiment, visual stimuli 31a is a brightening or a flashing of a white light source or a colored light source. In a second exemplary embodiment, sound stimuli 31b is a modulation of an audible sound source or a non-audible sound source. Physiological sensor 32 senses a physiological response 34 to visual stimuli 31a and/or sound stimuli 31b.

In one exemplary embodiment, physiological sensor 32 is a camera or an iris scanner for sensing a physiological response to visual stimuli 31a that will either be a stimulated physiological response as represented by perceivable constriction of eye pupils of requester 20, or a non-stimulated physiological response as represented by an imperceivable constriction/non-constriction of the eye pupils of requester 20.

In a second exemplary embodiment, physiological sensor 32 is an electroencephalography sensor for sensing a physiological response to sound stimuli 31b that will either be stimulated physiological response as represented by a perceivable variation of an electroencephalogram of requester 20, or a non-stimulated physiological response as represented by an imperceivable variation/non-variation of the electroencephalogram of requester 20.

Natural response detector 50 employs an algorithm 104a or a classifier 104b to detect the stimulated physiological response or the non-stimulated physiological response to visual stimuli 31a or alternatively sound stimuli 31b based on a comparison of the sensed physiological response 34 and a universal physiological response 44.

If natural response detector 50 detects the non-stimulated physiological response to visual stimuli 31a or alternatively sound stimuli 31b, then natural response detector 50 generates/communicates invalid security access request 42 (e.g., a textual/graphic display, a verbalization and/or an audible alert of an invalid security access request 42).

If natural response detector 50 detects the stimulated physiological response to visual stimuli 31a or alternatively sound stimuli 31b, then natural response detector 50 communicates an enabling authentic testing signal 105 to enhance human authenticator 60. In response thereto, enhance human authenticator 60 employs an algorithm 106a, a classifier 106b or a classifier network 160c for implementing security access modality(ies) as known in the art of the present disclosure or hereinafter conceived (e.g., a facial recognition modality, an iris recognition modality, a speech recognition modality, a fingerprint recognition modality and/or handwriting recognition modality, etc.). and/or a physiological response recognition modality of the present disclosure to conditionally authenticate the security access request as exemplary described herein.

More particularly, an algorithm 106a, a classifier 106b or a classifier network 160c processes sensed physiological response 34, an enabling authentic testing signal 105, live security access data 107a and/or archived security access data 107b to test the authenticity of the security access request. From the output of algorithm 106a, classifier 106b or classifier network 160c, enhance human authenticator 60 will either generate/communicate authentic security access request 43 (e.g., a textual/graphic display, a verbalization and/or an audible alert of authentic security access request 43) invalid security access request 42 (e.g., a textual/graphic display, a verbalization and/or an audible alert of an invalid security access request 42).

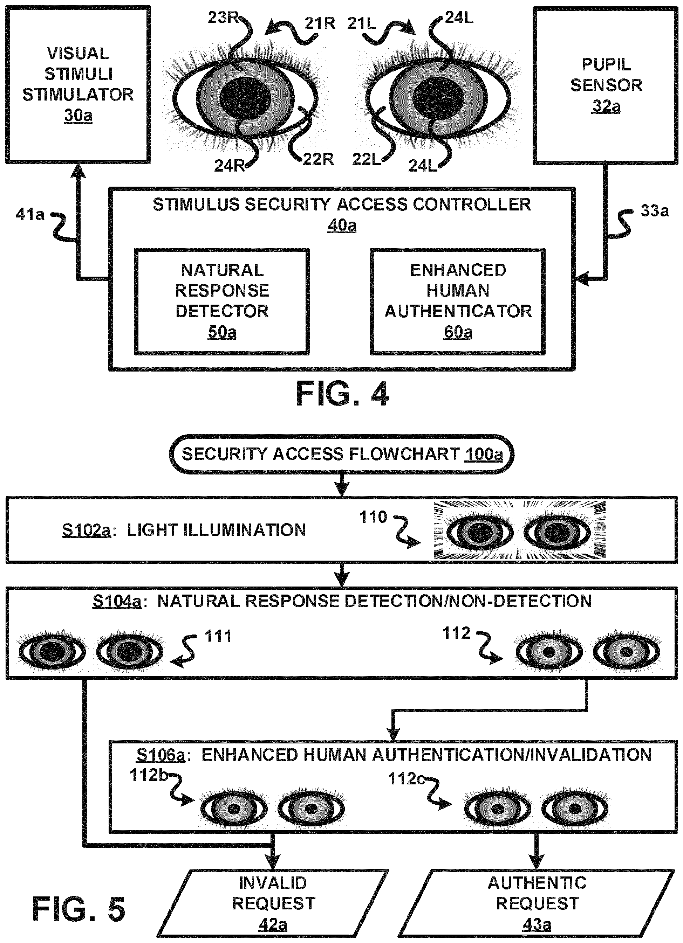

To facilitate an understanding of the present disclosure, the following description of FIGS. 4-16 teaches exemplary embodiments of visual stimuli security access controllers, devices and methods in accordance with the present disclosure. From the description of FIGS. 4-16, those having ordinary skill in the art of the present disclosure will appreciate how to apply the present disclosure to make and use additional embodiments of visual stimuli security access controllers, devices and methods in accordance with the present disclosure.

FIG. 4 illustrates a visual stimulus security access device of the present disclosure employing a visual stimuli generator 30a, a pupil sensor 32a and an enhanced/stimulus security access controller 40a of the present disclosure for authenticating or invalidating a security access request.

Referring to FIG. 4, controller 40a provides an enabling/disabling feature of a security access modality(ies) (e.g., a facial recognition modality and/or an iris recognition modality) and/or physiological response recognition modality whereby the enabling/disabling feature is premised on a detection of a stimulated pupil response by a requester to the visual stimuli or a non-stimulated pupil response by the security access requester to the visual stimuli. More particularly, it is anticipated that security access requester seeking security access to secured content is a live human having a right eye 20R and/or a left eye 20L, which are imageable/scannable for imaging/scanning a sclera 21R, an iris 22R and a pupil 23R of the right eye 20R and for imaging/scanning a sclera 21L, an iris 22L and a pupil 23L of the left eye 20L. The enabling/disabling feature determines, from an image/scan of right eye 20R and/or left eye 20L, if the security access requester is a human or a non-human (e.g., static image/mask) based on a detection of a stimulated pupil response by the security access requester to a visual stimuli (e.g., any detected pupil constriction of the security access requester to the visual stimuli, or a detected pupil constriction of the security access requester to the visual stimuli that exceeds a pre-defined pupil constriction threshold), or a detection of a non-stimulated pupil response by the security access requester to the visual stimuli (e.g., non-detection of a pupil constriction of the security access requester to the visual stimuli, or a detected pupil constriction of the security access requester to the visual stimuli that does not exceed a pre-defined pupil constriction minimum).

Controller 40a employs a natural response detector 50a and an enhanced human authenticator 60a to enable an implementation of security access modality(ies) and/or physiological response recognition modality based on a detection of a stimulated pupil response by the security access requester to a visual stimuli, and disables security access modality(ies) and/or physiological response recognition modality based on a detection of a non-stimulated pupil response by the security access requester to a visual stimuli.

In operation, visual stimulus security access device of FIG. 4 executes a flowchart 100a representative of visual stimuli security access method of the present disclosure.

Referring to FIGS. 4 and 5, a stage S102 of flowchart 100 encompasses visual stimulator 30a controls an application of a visual stimuli 110 to the security access requester (e.g., a brightening of a security access display screen, or a brightening or a flashing of a light source adjacent a security access display screen or interface).

A stage S104a of flowchart 100a encompasses natural response detector 50a detecting (1) a stimulated pupil response 112 by the security access requester to the visual stimuli 110 (e.g., any detected pupil constriction of the security access requester to a brightening of a security access display screen, or a detected pupil constriction of the security access requester to a brightening of a security access display screen that exceeds a pre-defined pupil constriction threshold), or (2) a non-stimulated pupil response 111 of the security access requester to the visual stimuli 110 (e.g., a non-detection of a pupil constriction to a brightening of a security access display screen, or a detected pupil constriction of the security access requester to a brightening of a security access display screen that does not exceed a pre-defined pupil constriction minimum).

In one embodiment, natural response detector 50a detects the stimulated pupil response 112 by the security access requester to the visual stimuli 110 or the non-stimulated pupil response 111 by the security access requester to the visual stimuli 110 from a comparison of requester pupil size within an image (camera or scan) of the orbital region of the security access requester to a universal baseline pupil size (e.g., derived from a population of pupil sizes responsive to a visual stimuli or a historic storage of the security access requester pupil sizes responsive to a visual stimuli 110).

The pupil size comparison may be implemented by a programmed algorithm or a classifier as subsequently described herein.

Alternative to the pupil size, the visual stimuli 110 may be an infrared ambient light whereby the physiological response may be derived from (1) a geo-spatial location of skin blemishes responsive to the IR ambient light, (2) a geo-special location to other anatomic locations (e.g., nares, eye lid, etc.) responsive to the IR ambient light, (3) a size and a shape of blemishes responsive to the IR ambient light, and (4) a color of light ambient to blemishes responsive to the IR ambient light.

If natural response detector 50a detects a non-stimulated physiological response 111 to visual stimuli 110 during stage S104a, then controller 40a generates/communicates an invalid security access request 42a and flowchart 100 is terminated (e.g., a textual/graphic display, a verbalization and/or an audible alert of an invalid security access request 42a).

If natural response detector 50a detects a stimulated physiological response 112 to external stimuli 110 during stage S 104a, then controller 40a proceeds to a stage S 106a of flowchart 100a to conditionally authenticate the security access request.

Stage S106a encompasses enhanced human authenticator 60a conditionally authenticates from an implementation of security access modality(ies) and/or a physiological response recognition modality whereby (1) the security access request by the security access requester is authenticated based a recognition of the security access requester as a human or (2) the security access request by the security access requester is invalidated based a recognition of the security access requester as a non-human.

If enhanced human authenticator 60a recognizes the security access requester as a human, the controller 40a will generate/communicate authentic security access request 43a (e.g., a textual/graphic display, a verbalization and/or an audible alert of authentic security access request 43a).

Otherwise, if enhanced human authenticator 60a recognizes the security access requester as a non-human, the controller 40a will generate/communicate invalid security access request 44a (e.g., a textual/graphic display, a verbalization and/or an audible alert of invalid security access request 44a).

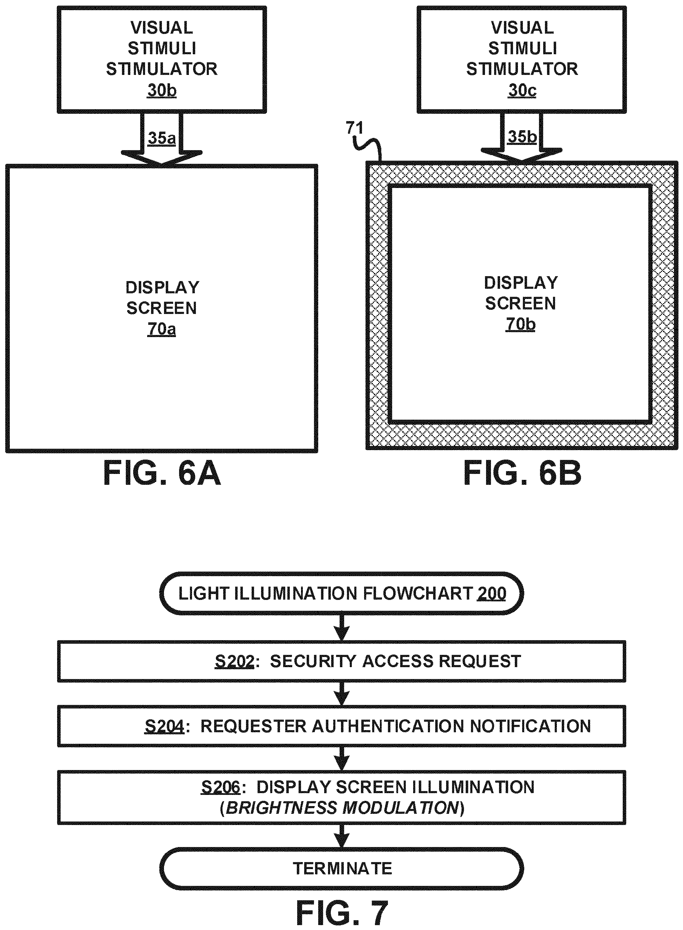

FIG. 6A illustrates a visual stimuli generator 30b for controlling a brightening of a display screen 70a of a security access device, and FIG. 6B illustrates a visual stimuli generator 30c for controlling a flashing of a light source 71 encircling a display screen 70b of a security access device.

In operation, controller 40a (FIG. 1) implements a flowchart 200 representative of a light illumination flowchart 200 as shown in FIG. 7.

Referring to FIG. 7, a stage S202 of flowchart 200 encompasses controller 40a receiving a security access request and a stage S204 of flowchart 200 encompasses controller 40a communicating a notification of the security access requester to prepare to be visually stimulated.

After a pre-defined delay of stage S204, a stage S206 of flowchart 200 encompasses an illumination of a display screen, such as, for example, visual stimuli generator 30b controlling a brightening of a display screen 70a as shown in FIG. 6A or visual stimuli generator 30c controlling a flashing of light source 71 encircling display screen 70b as shown in FIG. 6B.

The visual stimuli are intended to stimulate a physiological response by a human requester.

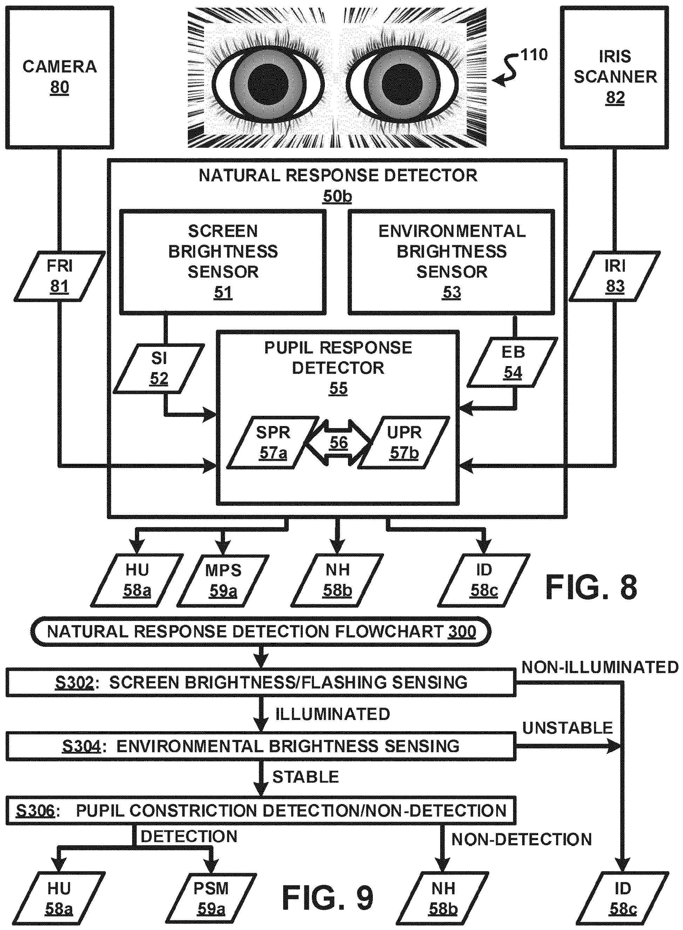

FIG. 8 illustrates a natural response detector 50b employing a screen brightness sensor 51, an environmental brightness sensor 53 and a pupil response detector 55.

Screen brightness sensor 51 broadly encompasses any hardware/software/firmware sensor, as known in the art of the present disclosure or hereinafter conceived, for conditionally confirming a generation of brightening or a flashing of a display screen via a screen illumination signal 52.

Environmental brightness sensor 52 broadly encompasses any hardware/software/firmware sensor, as known in the art of the present disclosure and hereinafter conceived, for differentiating, via an environmental brightness signal 54, between a brightening or a flashing of a display screen and any sudden change in environment background light at the time of the visual stimuli generation.

Pupil response detector 55 broadly encompasses a detector in accordance with the present disclosure for detecting one of a stimulated pupil response to the visual stimuli or a non-stimulated pupil response to the visual stimuli based on a comparison of a sensed pupil size 57a and a universal baseline pupil response 57b.

In operation, as shown in FIG. 9, natural response detector 50b executes a flowchart 300 representative of a natural response detection method of the present disclosure.

A stage S302 of flowchart 300 encompasses screen brightness sensor 51 aiming to sense a visual stimulation 110 of a security access requester via a screen brightness/flashing. If sensor 51 fails to sense the visual stimulation 110 of a security access requester via a screen brightness/flashing, then detector 55 generates and communicates an indeterminate detection signal 58c to controller 40a (FIG. 3).

If sensor 51 senses visual stimulation 110 of a security access requester via a screen brightness/flashing, then during a stage S304 of flowchart 300, either sensor 53 senses an unstable brightness to the environment and detector 55 generates and communicates indeterminate detection signal 58c to controller 40a, or sensor 53 senses a stable brightness to the environment whereby detector 55 proceeds to a stage S306 of flowchart to either detecting one of a stimulated pupil response to the visual stimuli 110 or a non-stimulated pupil response to the visual stimuli 110.

More particularly, a camera 80 generates a facial recognition image 81 illustrative of a pupil response of the security access requester to the visual stimuli 110 and/or an iris scanner 82 generates an iris recognition image 83 illustrative of a pupil response of the security access requester to the visual stimuli 110. During stage S306, detector 55 compares the sensed pupil size 57a via image 81 and/ image 83 and a universal baseline pupil response 57b to thereby detect one of a stimulated pupil response to the visual stimuli 110 or a non-stimulated pupil response to the visual stimuli 110. Detector 55 generates a human requester signal 58a from a detection of a stimulated pupil response 112 (FIG. 3) to the visual stimuli 110, and generates a non-human requester signal 58b from a detection of a non-stimulated pupil response 111 (FIG. 3) to the visual stimuli 110.

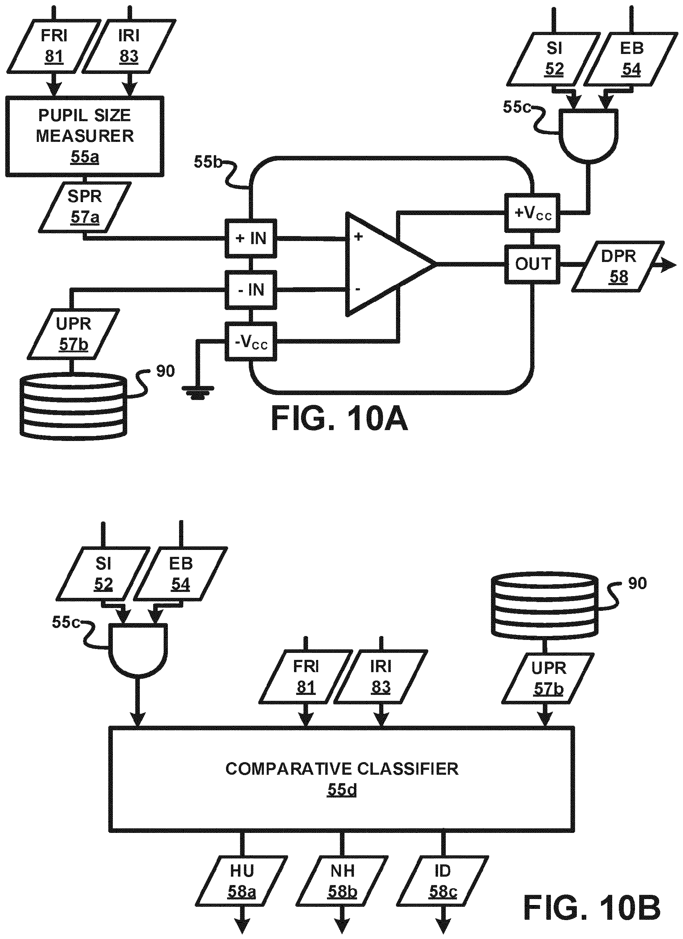

In one exemplary embodiment of stage 306, as shown in FIG. 10A, detector 55 (FIG. 8) employs a pupil size measurer 55a, a comparator 55b and a logical AND gate 55c. In operation, pupil size measurer 55a generates a sensed pupil size 57a from facial recognition image 81 and/or iris recognition image 83. Comparator 55b receives sensed pupil size 57a at a non-inverting input and further receives universal pupil size 57b from a database 90 at an inverting input. If comparator 55b is enabled by screen illumination signal 52 and environmental brightness signal 54, then comparator 55b outputs a detected physiological signal 58 as either human requester signal 58a if sensed pupil size 57a is less than universal pupil size 57b, or non-human requester signal 58b if sensed pupil size 57a is greater than universal pupil size 57b.

In a second exemplary embodiment of stage 307, as shown in FIG. 10B, detector 55 (FIG. 8) employs pupil size measurer 55a, logical AND gate 55c and a comparative classifier 55d.

Comparator classifier 55d broadly encompasses a functional mapping of a comparison of a sensed pupil size 57a and universal pupil size 57b to thereby output a prediction or a score indicative of detected stimulated pupil response or a detected non-stimulated pupil response (e.g., a classifier).

In operation, if comparative classifier 55d is enabled by screen illumination signal 52 and environmental brightness signal 54, then comparative classifier 55d applies an extraction function via convolutional layers and pooling layers to extract sensed pupil size 57a from facial recognition image 81 and/or iris recognition image 83, and the applies a comparative function via a fully connected layer and an output layer to the sensed pupil size 57a and universal pupil size 57b. Comparative classifier 55d outputs human requester signal 58a if sensed pupil size 57a is less than universal pupil size 57b, or non-human requester signal 58b if sensed pupil size 57a is greater than universal pupil size 57b.

Alternatively, comparative classifier 55d may receive the sensed pupil size 57a from pupil size measurer 55a.

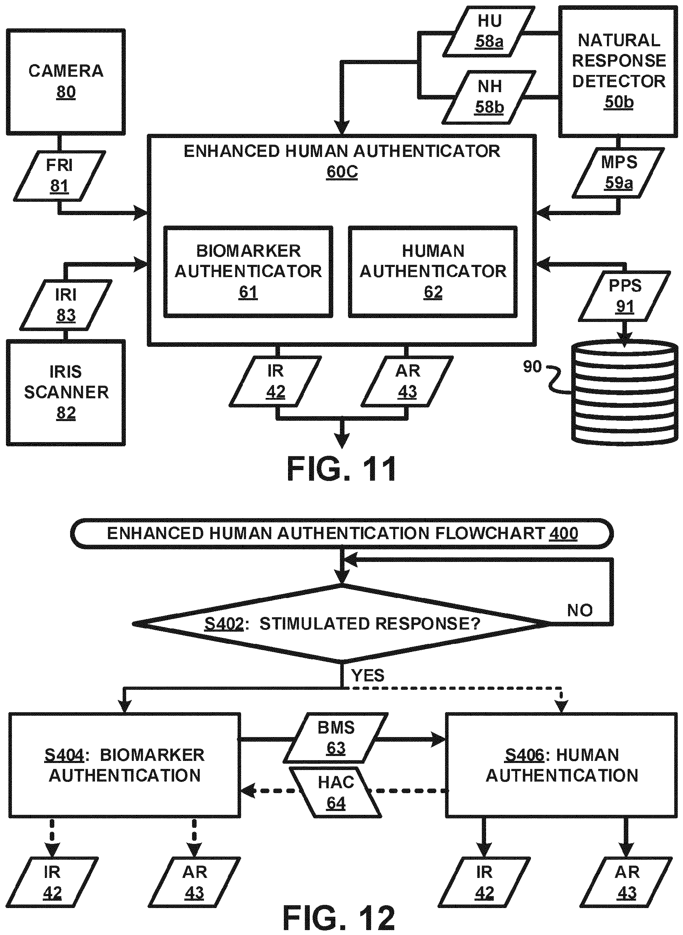

FIG. 11 illustrates an enhanced human authenticator 60c employing a biomarker authenticator 61 and/or a human authenticator 62.

Biomarker authenticator 61 executes a physiological response recognition modality in accordance with the present disclosure to test an authenticity of a security access request based on a comparison of measured pupil size 59a is similar to a personal pupil size 91 archived in database 90.

Human authenticator 62 executes a facial recognition modality and/or an iris recognition modality in accordance with the present disclosure to test an authenticity of a security access request based on a machine learning model and a network of machine learning modes.

In operation, enhanced human authenticator 60c executes a flowchart 400 as shown in FIG. 12 that is representative of an enhanced human authentication method of the present disclosure.

In one exemplary embodiment of flowchart 400 employing biomarker authenticator 61 only, if a detected stimulated physiological response is communicated to enhanced human authenticator 60c via human signal 58a during a stage S402 of flowchart 400, then a stage S404 of flowchart 400 encompasses biomarker authenticator 61 either generating and communicating an authentic security access request 43 if a measured pupil size 59a is similar to a personal pupil size 91 archived in database 90, or generating and communicating an invalid security access request 42 is measured pupil size 59a is dissimilar to personal pupil size 91 archived in database 90.

In a second exemplary embodiment of flowchart 400 employing human authenticator 62 only, if a detected stimulated physiological response is communicated to enhanced human authenticator 60c via human signal 58a during stage S402, then a stage S406 of flowchart 400 encompasses human authenticator 62 either generating and communicating an authentic security access request 43 from a classification of facial recognition image 81 and/or iris recognition image 83 as being illustrative of an authentic security access requester, or generating and communicating an invalid security access request 42 from a classification of facial recognition image 81 and/or iris recognition image 83 as being illustrative of invalid security access requester.

In a third exemplary embodiment of flowchart 400 employing biomarker authenticator 61 and human authenticator 62, if a detected stimulated physiological response is communicated to enhanced human authenticator 60c via human signal 58a during a stage S402 of flowchart 400, then stage S404 of flowchart 400 encompasses biomarker authenticator 61 generating a biomarker signal 63 classifying or quantifying a similarity or a dissimilarity of measured pupil size 59a and personal pupil size 91, and stage 406 of flowchart 400 encompasses human authenticator 62 either generating and communicating an authentic security access request 43 from a classification of facial recognition image 81, iris recognition image 83 and as biomarker similarity signal 63 as collectively being indicative of an authentic security access requester, or generating and communicating an invalid security access request 42 from a classification of facial recognition image 81, iris recognition image 83 and as biomarker similarity signal 63 as being illustrative of an invalid security access requester.

In a fourth exemplary embodiment of flowchart 400 employing biomarker authenticator 61 and human authenticator 62, if a detected stimulated physiological response is communicated to enhanced human authenticator 60c via human signal 58a during a stage S402 of flowchart 400, then stage S406 of flowchart 400 encompasses human authenticator 62 generating and communicating a human authentic classification 64 indicative of classification of facial recognition image 81 and/or iris recognition image 83 as being illustrative of an authentic security access requester or an invalid security access requester, and a stage S404 of flowchart encompasses biomarker authenticator 61 either generating and communicating an authentic security access request 43 if a measured pupil size 59a is similar to a personal pupil size 91 archived in database 90 and the classification signal 64 indicates an authentic security access requester, or generating and communicating an invalid security access request 42 is measured pupil size 59a is dissimilar to personal pupil size 91 archived in database 90 or and the classification signal 64 indicates an invalid security access requester.

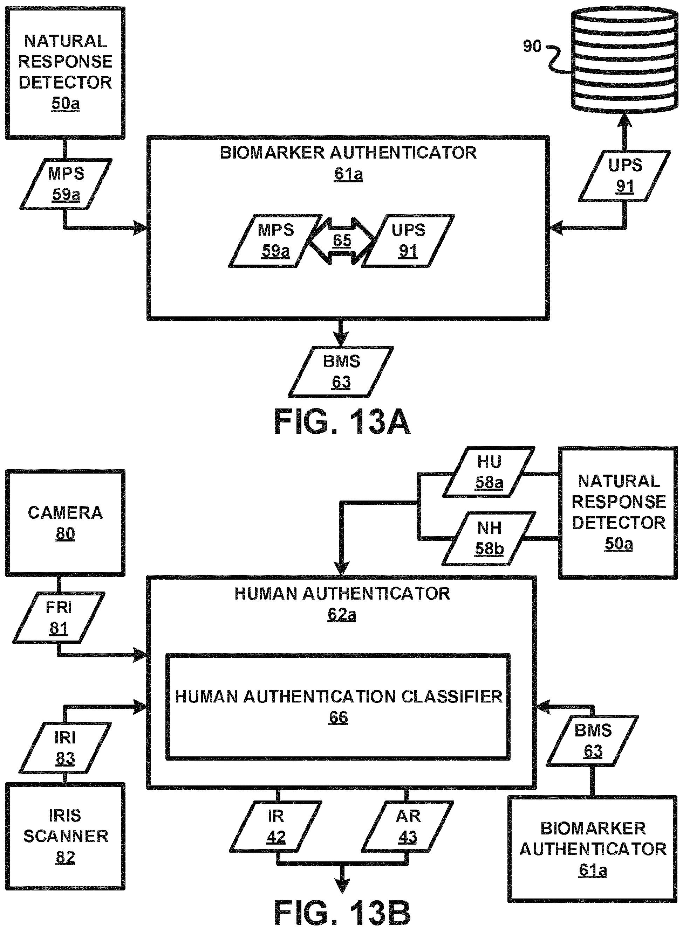

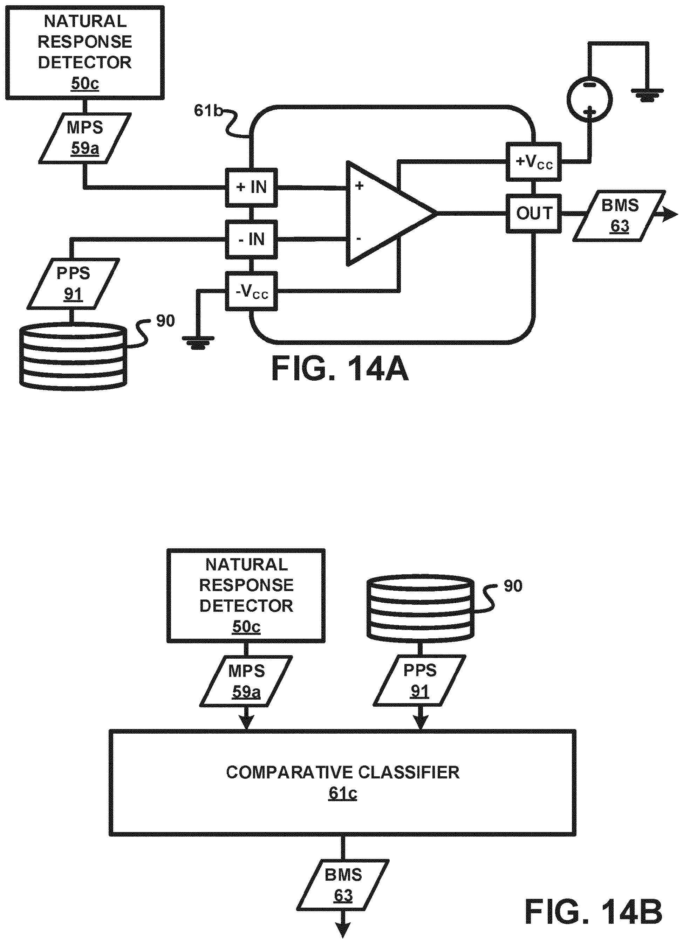

In one exemplary embodiment of biomarker authenticator 61 as shown in FIG. 13A, a biomarker authenticator 61a compares measured pupil size 59a to a personal pupil size 91 archived in database 90 to generate a biomarker signal 63 indicative of an authentic security access requester or an invalid security access requester. Biomarker authenticator 61a may be embodied as a comparator 61b as shown in FIG. 14A or as a comparative classifier 61c as shown in FIG. 14B.

In one exemplary embodiment of human authenticator 62 as shown in FIG. 13B, human authenticator 62a employs a human authentication classifier 66 broadly encompassing a functional mapping a facial recognition testing of facial recognition image 81 and/or an iris recognition testing of iris recognition image 83 to thereby output an invalid security access request 42 or an authentic security access request 43.

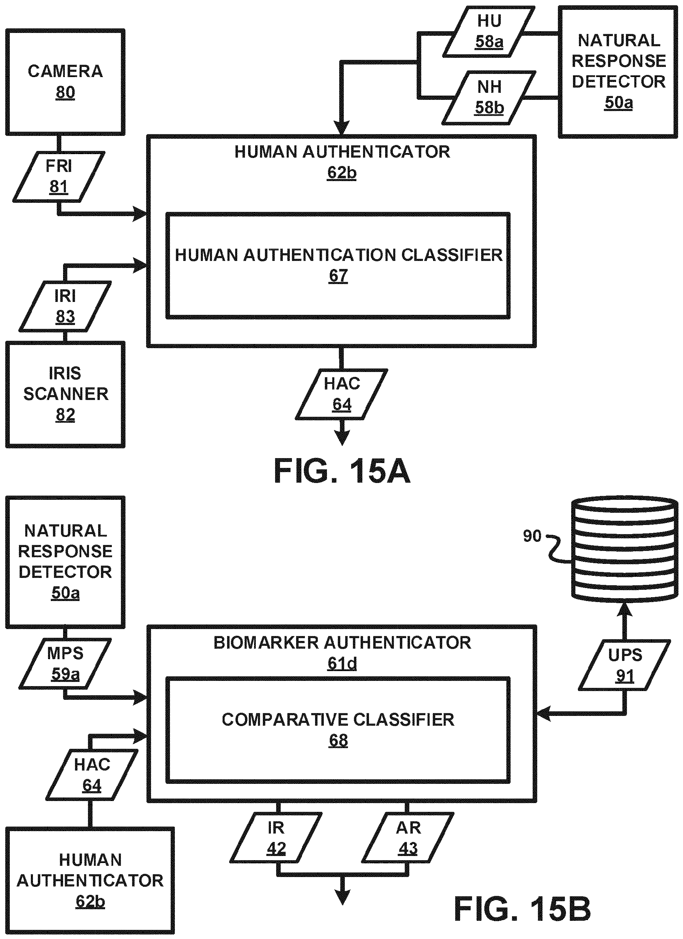

In a second exemplary embodiment of human authenticator 62 as shown in FIG. 15A, human authenticator 62b employs a human authentication classifier 66 broadly encompassing a functional mapping a facial recognition testing of facial recognition image 81 and/or an iris recognition testing of iris recognition image 83 to thereby output human authentic classification 64 indicative of classification of facial recognition image 81 and/or iris recognition image 83 as being illustrative of an authentic security access requester or an invalid security access requester.

In a second exemplary embodiment of biomarker authenticator 61 as shown in FIG. 15B, a biomarker authenticator 61d employs a comparative classifier 68 enabled/disabled by human authentic classification 64 by broadly encompassing a functional mapping of a comparison of measured pupil size 59a to a personal pupil size 91 archived in database 90 either generating and communicating an authentic security access request 43 if a measured pupil size 59a is similar to a personal pupil size 91 archived in database 90, or generating and communicating an invalid security access request 42 is measured pupil size 59a is dissimilar to personal pupil size 91 archived in database 90.

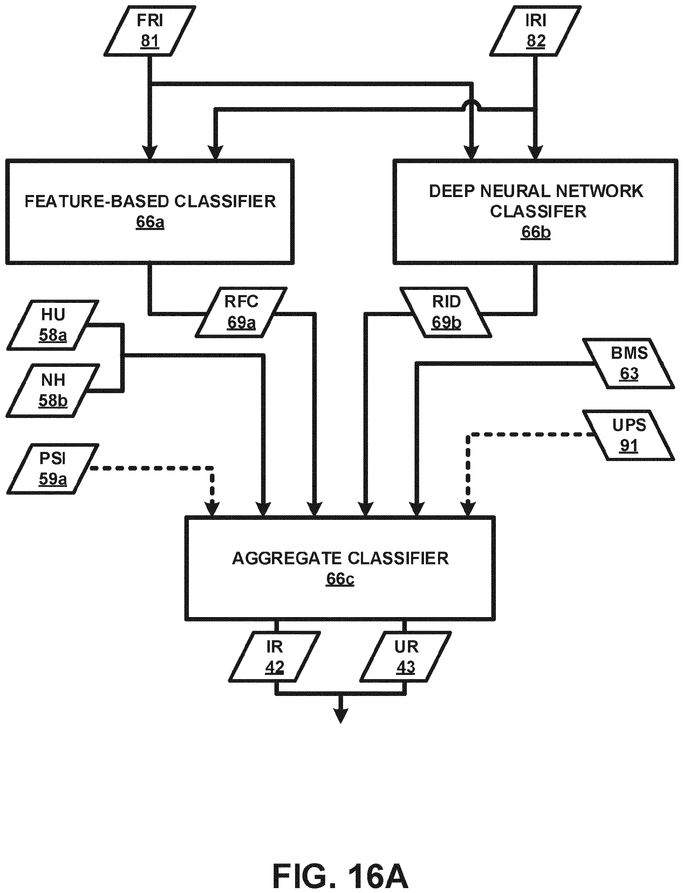

In a third exemplary embodiment of human authenticator 62 as shown in FIG. 16A, human authenticator 62c employs a feature-based classifier 66a encompassing a functional mapping a facial recognition testing of facial recognition image 81 and/or an iris recognition testing of iris recognition image 83 to thereby output a requester feature classification 69a of facial recognition image 81 and/or iris recognition image 83 as being illustrative of features of an authentic security access requester or features of an invalid security access requester.

Human authenticator 62b employs a deep learning network classifier 66b encompassing a functional mapping a facial recognition testing of facial recognition image 81 and/or an iris recognition testing of iris recognition image 83 to thereby output a requester identification classification 69b of facial recognition image 81 and/or iris recognition image 83 as being illustrative of an identification of authentic security access requester or a delineation of an invalid security access requester.

Human authenticator 62b employs an aggregate classifier 66c encompassing a functional mapping of a facial recognition testing of requester feature classification 69a, requester identification classification 69b and optionally biomarker signal 63 thereby output authentic security access request 43 or an invalid security access request 42.

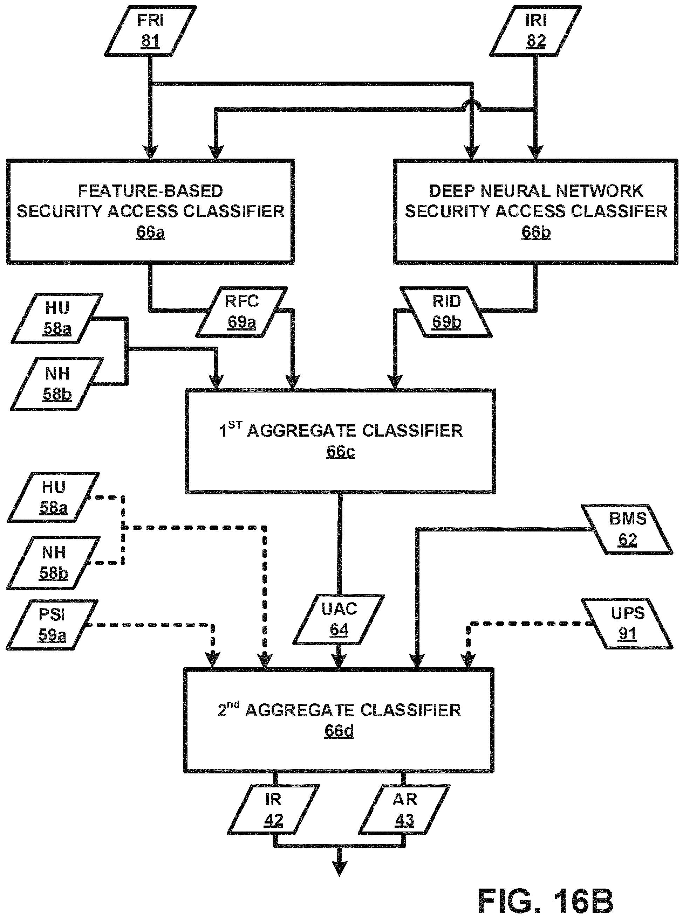

In a fourth exemplary embodiment of human authenticator 62 as shown in FIG. 16A, human authenticator 62d is a version of human authenticator 62c (FIG. 16) employing a two stage aggregation classifiers 66c and 66d.

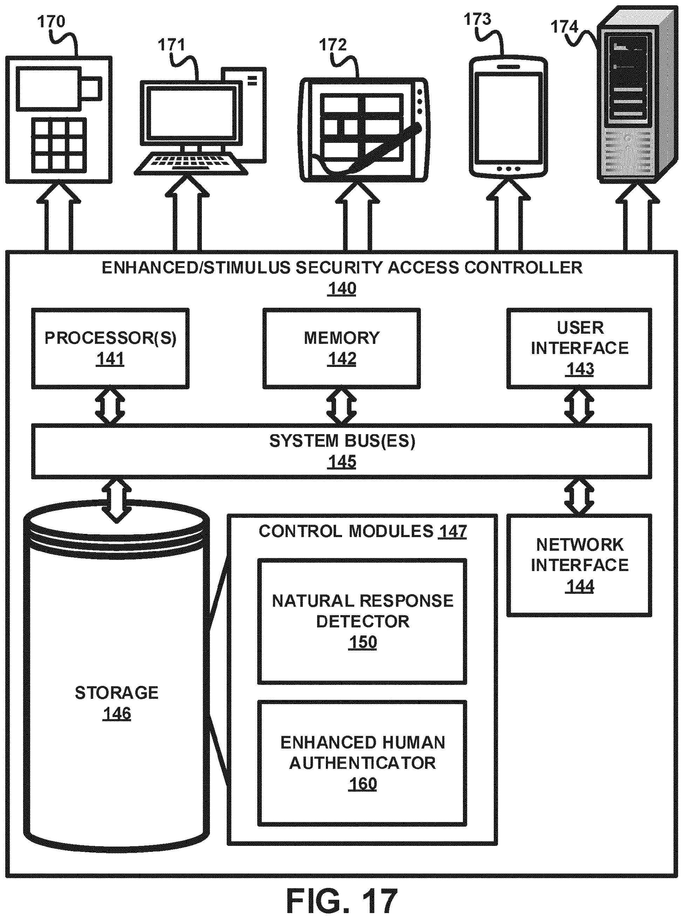

To facilitate an understanding of the present disclosure, the following description of FIG. 17 teaches exemplary embodiments of stimulus security access devices and systems in accordance with the present disclosure. From the description of FIG. 17, those having ordinary skill in the art of the present disclosure will appreciate how to apply the present disclosure to make and use additional embodiments stimulus security access devices and systems in accordance with the present disclosure.

Referring to FIG. 17, an exemplary embodiment 140 of enhanced/stimulus security access controller 40 (FIG. 1) includes one or more processor(s) 141, memory 142, a user interface 143, a network interface 144, and a storage 146 interconnected via one or more system buses 145.

Each processor 141 may be any hardware device, as known in the art of the present disclosure or hereinafter conceived, capable of executing instructions stored in memory 142 or storage or otherwise processing data. In a non-limiting example, the processor(s) 141 may include a microprocessor, field programmable gate array (FPGA), application-specific integrated circuit (ASIC), or other similar devices.

The memory 142 may include various memories, as known in the art of the present disclosure or hereinafter conceived, including, but not limited to, L1, L2, or L3 cache or system memory. In a non-limiting example, the memory 142 may include static random access memory (SRAM), dynamic RAM (DRAM), flash memory, read only memory (ROM), or other similar memory devices.

The user interface 143 may include one or more devices, as known in the art of the present disclosure or hereinafter conceived, for enabling communication with a user such as an administrator. In a non-limiting example, the user interface may include a command line interface or graphical user interface that may be presented to a remote terminal via the network interface 144.

The network interface 144 may include one or more devices, as known in the art of the present disclosure or hereinafter conceived, for enabling communication with device(s), system(s) and/or network(s). In a non-limiting example, the network interface 144 may include a network interface card (NIC) configured to communicate according to the Ethernet protocol. Additionally, the network interface 144 may implement a TCP/IP stack for communication according to the TCP/IP protocols. Various alternative or additional hardware or configurations for the network interface 144 will be apparent.

The storage 146 may include one or more machine-readable storage media, as known in the art of the present disclosure or hereinafter conceived, including, but not limited to, read-only memory (ROM), random-access memory (RAM), magnetic disk storage media, optical storage media, flash-memory devices, or similar storage media. In various non-limiting embodiments, the storage 146 may store instructions for execution by the processor(s) 141 or data upon with the processor(s) 141 may operate. For example, the storage 146 may store a base operating system for controlling various basic operations of the hardware. The storage 146 also stores application modules including a natural response detector 150 and an enhanced human authenticator 160 in the form of executable software/firmware for implementing the various functions of natural response detector 50 (FIG. 1) and enhanced human authenticator 60 (FIG. 1) as previously described in the present disclosure.

Still referring to FIG. 17, a stimulus security access device of the present disclosure encompasses enhanced/stimulus security access controller 40 (FIG. 1), particularly enhanced/stimulus security access controller 140 as shown), installed within a security access device locally storing or having remote access to secured content as known in the art of the present disclosure or herein after conceived. Examples of a stimulus security access device of the present disclosure include, but are not limited to, (1) a security camera/card reader/keypad device 170, (2) a workstation 171, (3) a smart pad 172 and (4) a smart phone 173.

Still referring to FIG. 17, a stimulus security access system of the present disclosure encompasses enhanced/stimulus security access controller 40 (FIG. 1), particularly enhanced/stimulus security access controller 140 as shown), distributively installed between security access devices locally storing or having remote access to secured content as known in the art of the present disclosure or herein after conceived. Examples of a stimulus security access device of the present disclosure include, but are not limited to, (1) a natural response detector 150 of the present disclosure being installed a security camera/card reader/keypad device 170, a workstation 171, a smart pad 172 and a smart phone 173, and (2) an enhanced human authenticator 160 of the present disclosure installed within a security server 174.

Referring to FIGS. 1-17, those having ordinary skill in the art of the present disclosure will appreciate numerous benefits of the present disclosure including, but not limited to, analyzing a sensed physiological response by a security access requester to an external stimuli to thereby differentiate a human security access requester from a non-human security access requester (e.g., static images/masks) as a basis for timely and credibly authenticating or invalidating a secure access request, particularly to secured data/content (e.g., medical/health data) for access to secured data/content, machines, devices, workstations, etc.

Additionally, the terms "signal", "data" and "command" broadly encompasses all forms of a detectable physical quantity or impulse (e.g., voltage, current, or magnetic field strength) as understood in the art of the present disclosure and as exemplary described in the present disclosure for transmitting information and/or instructions in support of applying various inventive principles of the present disclosure as subsequently described in the present disclosure. Signal/data/command communication various components of the present disclosure may involve any communication method as known in the art of the present disclosure including, but not limited to, signal/data/command transmission/reception over any type of wired or wireless datalink and a reading of signal/data/commands uploaded to a computer-usable/computer readable storage medium.

Further, as one having ordinary skill in the art will appreciate in view of the teachings provided herein, structures, elements, components, etc. described in the present disclosure/specification and/or depicted in the Figures may be implemented in various combinations of hardware and software, and provide functions which may be combined in a single element or multiple elements. For example, the functions of the various structures, elements, components, etc. shown/illustrated/depicted in the Figures can be provided through the use of dedicated hardware as well as hardware capable of executing software in association with appropriate software for added functionality. When provided by a processor, the functions can be provided by a single dedicated processor, by a single shared processor, or by a plurality of individual processors, some of which can be shared and/or multiplexed. Moreover, explicit use of the term "processor" or "controller" should not be construed to refer exclusively to hardware capable of executing software, and can implicitly include, without limitation, digital signal processor ("DSP") hardware, memory (e.g., read only memory ("ROM") for storing software, random access memory ("RAM"), non-volatile storage, etc.) and virtually any means and/or machine (including hardware, software, firmware, combinations thereof, etc.) which is capable of (and/or configurable) to perform and/or control a process.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future (e.g., any elements developed that can perform the same or substantially similar function, regardless of structure). Thus, for example, it will be appreciated by one having ordinary skill in the art in view of the teachings provided herein that any block diagrams presented herein can represent conceptual views of illustrative system components and/or circuitry embodying the principles of the disclosure. Similarly, one having ordinary skill in the art should appreciate in view of the teachings provided herein that any flow charts, flow diagrams and the like can represent various processes which can be substantially represented in computer readable storage media and so executed by a computer, processor or other device with processing capabilities, whether or not such computer or processor is explicitly shown.

Having described preferred and exemplary embodiments for stimuli based security access authentication/validation (which embodiments are intended to be illustrative and not limiting), it is noted that modifications and variations can be made by persons skilled in the art in light of the teachings provided herein, including the Figures. It is therefore to be understood that changes can be made in/to the preferred and exemplary embodiments of the present disclosure which are within the scope of the embodiments disclosed herein. Thus, while the present disclosure has been illustrated and described in detail in the drawings and foregoing description, such illustration and description are to be considered illustrative or exemplary and not restrictive; the present disclosure not being limited to the disclosed embodiments.

Moreover, it is contemplated that corresponding and/or related systems incorporating and/or implementing the device/system or such as may be used/implemented in/with a device in accordance with the present disclosure are also contemplated and considered to be within the scope of the present disclosure. Further, corresponding and/or related method for manufacturing and/or using a device and/or system in accordance with the present disclosure are also contemplated and considered to be within the scope of the present disclosure.

In interpreting the appended claims, it should be understood that:
(a) the word "comprising" does not exclude the presence of other elements or acts than those listed in a given claim;
(b) the word "a" or "an" preceding an element does not exclude the presence of a plurality of such elements;
(c) any reference signs in the claims do not limit their scope;
(d) several "means" may be represented by the same item or hardware or software implemented structure or function; and
(e) no specific sequence of acts is intended to be required unless specifically indicated.

Although claims have been formulated in this application to particular combinations of features, it should be understood that the scope of the present disclosure also includes any novel features or any novel combinations of features disclosed herein either explicitly or implicitly or any generalization thereof, whether or not it relates to the same features of the present disclosure as presently claimed in any claim and whether or not it mitigates any or all of the same technical problems as does the present disclosure. Notice is hereby given that new claims may be formulated to such features and/or combinations of features during the prosecution of the present disclosure or of any further application derived therefrom.

Having thus described the details and particularity required by the patent laws, what is desired to be protected by Letters Patent is set forth in the appended claims.

## Claims

1. A machine-implemented security access control method, comprising:
detecting a physiological response to one or more external stimuli; and
conditionally authenticating a security access request based on a detection of a physiological response to the external stimuli.

2. A security access control method as claimed in claim 1, wherein the external stimuli include at least one of:
a brightness level, a color or a flashing of a visual stimuli; and
an acoustic level or a non-acoustic level of a sound stimuli.

3. A security access control method as claimed in claim 1 or 2, further comprising comparing the physiological response to a universal physiological response to the external stimuli.

4. A security access control method as claimed in any of the preceding claims, wherein the conditionally authenticating the security access request is further based on execution of a security access control routine that is not based a detection of a physiological response to external stimuli.

5. A security access controller (40) for authenticating a security access request, the security access controller (40) being configured to carry out a security access control method as claimed in any of the preceding claims.

6. The security access controller of claim 5,
wherein the security access controller (40) includes a universal comparative classifier configured as a functional map comparing the physiological response to the external stimuli sensed by the at least one physiological sensor (31) and a universal physiological response to the external stimuli to output either a stimulated physiological response classification or a non-stimulated physiological response classification;
wherein the security access controller (40) is configured to render the detection of the stimulated physiological response to the external stimuli responsive to a universal comparative classifier outputting the stimulated physiological response classification; and
wherein the security access controller (40) is configured to render the detection of the non-stimulated physiological response to the external stimuli responsive to a universal comparative classifier outputting the non-stimulated physiological response classification.

7. The stimulus security access controller of claim 5 or 6, wherein the security access controller (40) is configured to:
execute at least one security access modality to determine one of an authentic security access request or an invalid security access request;
authenticate the security access request based on a determination of an authentic security access request derived from an execution of the at least one security access modality; and
invalidate the security access request based on a determination of an invalid security access request derived from the execution of the at least one security access modality.

8. The stimulus security access controller of claim 5, 6 or 7, wherein:
the security access controller (40) includes a security access classifier configured as a functional map applying a security access modality to at least one of security access data and the physiological response to the external stimuli sensed by the at least one physiological sensor (31) to an output of either an authentic security access request or an invalid security access request;
the security access controller (40) is configured to authenticate the security access request responsive to the security access classifier outputting the authentic security access request; and
the security access controller (40) is configured to invalidate the security access request responsive to the security access classifier outputting the invalid security access request.

9. The stimulus security access controller of claim 8, wherein the security access classifier includes:
at least one recognition classifier, the one recognition classifier or each recognition classifier being configured as a functional map applying one of a facial recognition modality, an iris recognition modality, a speech recognition modality, a fingerprint recognition modality or a handwriting recognition modality to the security access data to output one of an authentic security access recognition or an invalid security access recognition; and
a physiological response classifier configured as a functional map comparing the physiological response to the external stimuli sensed by the at least one physiological sensor (31) and a personal baseline physiological response to the external stimuli to output one of an authentic physiological response or an invalid physiological response; and
an aggregate classifier configured as a functional map aggregating the output of the one recognition classifier or each recognition classifier and the output of the physiological response classifier to the output of either the authentic security access request or the invalid security access request.

10. The security access controller (40) of claim 5,
wherein the security access controller (40) includes a security access classifier configured as a functional map applying a security access modality to at least one of security access data and the physiological response to the external stimuli sensed by the at least one physiological sensor (31) to an output of either an authentic security access request or an invalid security access request; and
wherein the security access controller (40) is configured to:
authenticate the security access request responsive to the security access classifier outputting the authentic security access request; and
invalidate the security access request responsive to the security access classifier outputting the invalid security access request.

11. The security access controller (40) of claim 10, wherein the security access classifier includes:
at least one recognition classifier, the one recognition classifier or each recognition classifier being configured as a functional map applying one of a facial recognition modality, an iris recognition modality, a speech recognition modality, a fingerprint recognition modality or a handwriting recognition modality to the security access data to output one of an authentic security access recognition or an invalid security access recognition; and
a physiological response classifier configured as a functional map comparing the physiological response to the external stimuli sensed by the at least one physiological sensor (31) and a personal baseline physiological response to the external stimuli to output one of an authentic physiological response or an invalid physiological response; and
an aggregate classifier configured as a functional map aggregating the output of the one recognition classifier or each recognition classifier and the output of the physiological response classifier to the output of either the authentic security access request or the invalid security access request.

12. A stimulus security access device for authenticating or invalidating a security access request, the stimulus security access device comprising:
a stimuli generator (30) controllable to generate one or more external stimuli;
at least one physiological sensor (31) operable to sense a physiological response to the external stimuli; and
a security access controller (40) as claimed in any of claims 5-11.

13. The stimulus security access device of claim 12, wherein the stimuli generator (30) is configured to control at least one of:
a brightness level, a color or a flashing of a visual stimuli; and
an acoustic level or a non-acoustic level of a sound stimuli.
